# EUROPEAN PATENT APPLICATION

(11) **EP 4 721 621 A2**
(43) Date of publication of application: **08.04.2026**
(21) Application number: 26153771.6
(22) Date of filing: 15.04.2024
(51) Int. Cl.: A47B 1/05, A47B 1/10, A47B 77/10, F24C 15/12, B65G 45/04, B65G 54/02, A47B 88/473, A47B 46/00

(54) **APPARATUS FOR CONVEYING OBJECTS**

(30) Priority: 21.04.2023 IT 202300007893
(62) Divisional of application: 24170276.0
(71) Applicant: G. Mondini SpA, 25033 Cologne (BS) (IT)
(72) Inventor: MONDINI, Paolo Carlo, 25033 Cologne BS (IT); BRENNA, Marco Paolo, 25033 Cologne (BS) (IT); BRUSCHI, Daniele, 20066 Melzo (MI) (IT); BOSIO, Silvano, 25033 Cologne (BS) (IT); SURACE, Alfonso, 25038 Rovato BS (IT); BIGNOTTI, Vanni, 24060 Castelli Calepio (BG) (IT)
(74) Representative: Ponchiroli, Simone

(57) **Abstract**

An apparatus for conveying objects, comprising a guide (2), which is constituted of a guide (2) with linear motors and which defines a forward movement path, and a carriage (3), which is coupled to the guide (2) and which is moved along the forward movement path by the linear motors of the guide (2). The carriage (3) comprises a movement element (4), slidably associated with the guide (2), a supporting element (5), which defines a housing (15) for housing an object and connected to the movement element (4), and a connecting element (6) interposed between the movement element (4) and the supporting element (5). The connecting element (6) comprises a base body (18), fixed to the movement element (4), a movable body (21), and a plurality of elastic elements (24) mounted between the base body (18) and the movable body (21). The supporting element (5) is removably coupled to the movable body (21) by means of a spring-loaded grub.

## Description

This invention relates to an apparatus for conveying objects.

This invention was developed with reference to apparatuses which comprise a guide with linear motors, which defines a forward movement path, and a plurality of carriages, which are moved along the forward movement path by the linear motors of the guide. In most prior art apparatuses of this type, each carriage comprises a movement element, which is slidably associated with the guide, and a supporting element, which is mounted on the movement element and which defines a housing for housing one or more objects to be conveyed.

Usually apparatuses of this type are used if multiple processing operations must be performed on the object placed in the housing. More generally, the main advantage due to the presence of the guide with linear motors is the possibility of moving the carriages which are associated with the guide itself independently of each other and very quickly. For this reason, apparatuses which comprise a guide with linear motors and carriages are increasingly widespread.

Despite that, when defining their own apparatus, the Applicant became aware that solutions currently present on the market are not without disadvantages. Firstly, apparatuses with guides with linear motors are relatively delicate since the coupling between the carriages and the guide with linear motors is a coupling that was developed to favour sliding of the carriages relative to the guide, not to withstand high mechanical stresses.

Consequently it is complicated if not impossible to use this type of apparatuses to perform operations on the objects, which are relatively heavy duty in mechanical terms.

By way of example, the Applicant is completing development of an apparatus in which the carriages also constitute the lower part of a vacuum sealing chamber for trays containing food products in which it is necessary to apply a considerable pressure on the carriages themselves in order to guarantee the vacuum seal. That proved impossible if the carriages are only supported by the guide with linear motors since the pressure applied would cause breakage or at least deformation of either the carriages or the guide.

In an attempt to overcome that problem, the Applicant developed several technical solutions in which, whenever the processing operation to be performed is such that it excessively stresses the carriage, an additional support for the carriage is provided, configured in such a way that it is the support which withstands the mechanical stresses, preventing them from instead being discharged onto the guide. However, in order to obtain that result it is necessary to make each component of the system with an extremely high level of precision, with an obvious increase in costs during production, installation and maintenance.

The Applicant also noticed a second disadvantage of the prior art apparatuses comprising a guide with linear motors, linked to the possibility of performing size change-overs. In fact, in some apparatuses there is no possibility of substituting the supporting element, whilst in others substitution of the supporting element is a lengthy, complex process and takes a long time. That excessively limits the operating flexibility and the productivity of the apparatus.

Finally, a further problem detected in the prior art apparatuses relates to the wheels which are mounted on the movement elements and which roll on the guide so as to improve both the sliding of the carriage on the guide, and the stability of the carriage during the movement along the forward movement path and, consequently, apparatus performance. Due to the high movement speeds of the carriage and the continuous contact between the wheels and the guide, the wheels are in fact subjected to extremely high wear. That makes it necessary either to substitute the wheels often so as to avoid malfunctions due to problems linked to the interaction between the wheels and the guide (for example, if a wheel is very worn, it is possible that the supporting element does not have the desired orientation and therefore apparatus malfunctions occur), or to stop the plant often so as to allow an operator to lubricate the wheels one at a time.

In this context, the technical purpose which forms the basis of this invention is to provide an apparatus for conveying objects which overcomes at least one of the above-mentioned disadvantages.

In particular the technical purpose of this invention is to provide an apparatus for conveying objects in which it is simpler to perform heavy-duty mechanical processing operations on the objects conveyed, than is currently the case with prior art apparatuses and in which size change-over operations can be performed more easily and quickly than in prior art apparatuses.

Yet another technical purpose of this invention is to provide an apparatus for conveying objects which comprises a carriage in which the wheels of the movement element are less exposed to wear than the wheels of the movement elements of prior art apparatuses.

The technical purpose specified and the aims indicated are substantially achieved by an apparatus for conveying objects as defined in independent claim 1. Particular embodiments of this invention are defined in the corresponding dependent claims.

Further features and the advantages of this invention will be more apparent in the detailed description of several preferred, non-limiting, embodiments of an apparatus for conveying objects which are illustrated in the accompanying drawings, in which:
- Figure 1 is an axonometric view of an example of an apparatus made in accordance with this invention with some parts cut away to better illustrate others (in particular with carriages without supporting element);
- Figure 2 is an axonometric view of a carriage which is part of the apparatus of Figure 1;

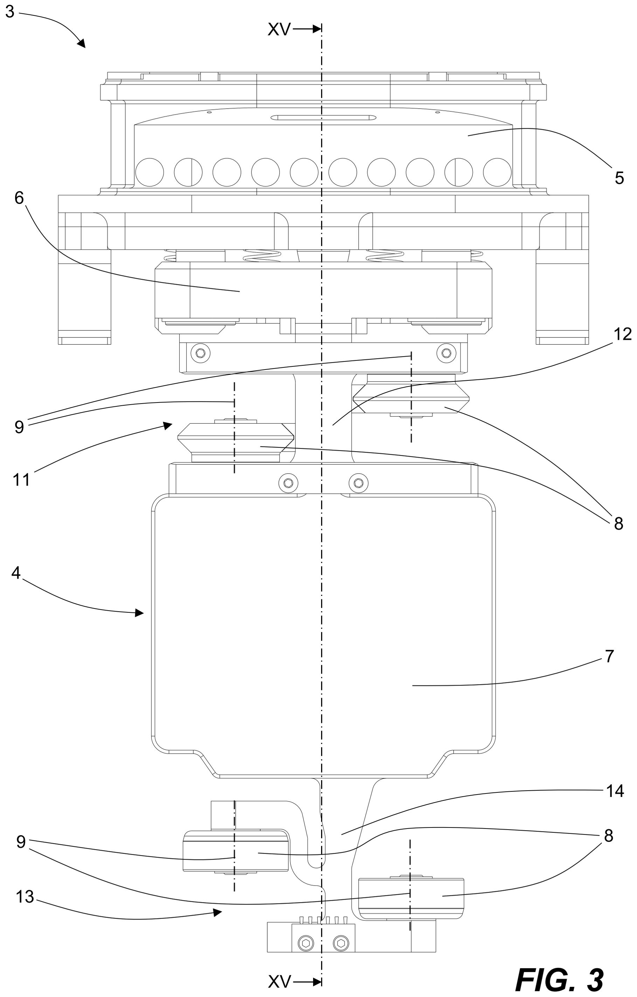

- Figure 3 is a front view of the carriage of Figure 2;

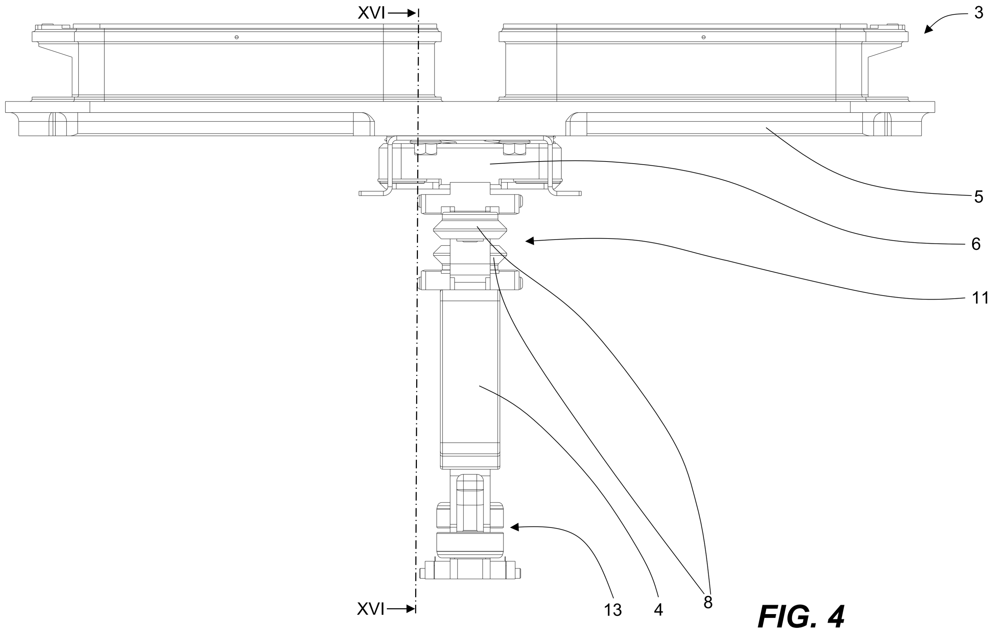

- Figure 4 is a side view of the carriage of Figure 2;

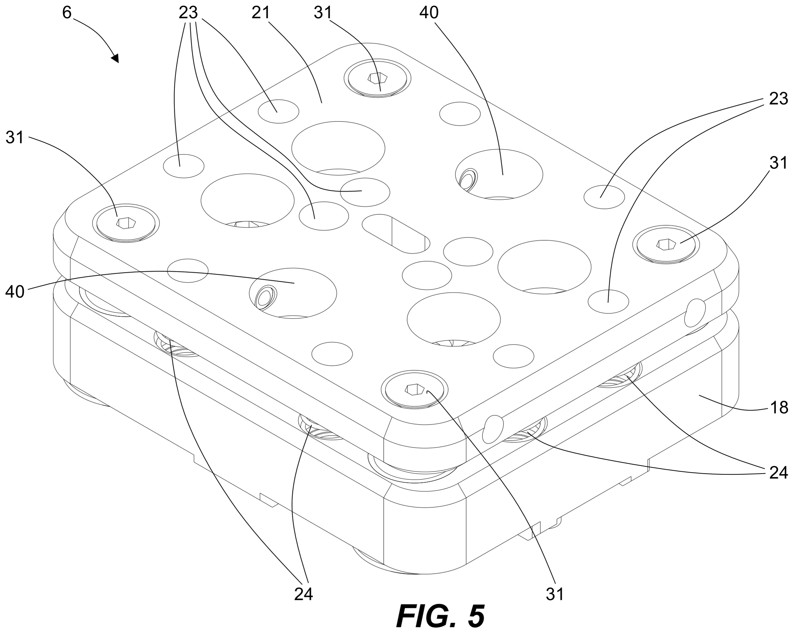

- Figure 5 is an axonometric top view of a connecting element which is part of the carriage of Figure 2;
- Figure 6 is an axonometric bottom view of the connecting element of Figure 5;
- Figure 7 is a top view of the connecting element of Figure 5;
- Figure 8 is a bottom view of the connecting element of Figure 5;
- Figure 9 is a side view in vertical section of the connecting element of Figure 7 sectioned according to the section line IX - IX;
- Figure 10 is a front view in vertical section of the connecting element of Figure 7 sectioned according to the section line X - X;
- Figure 11 is an axonometric top and exploded view of the connecting element of Figure 5;

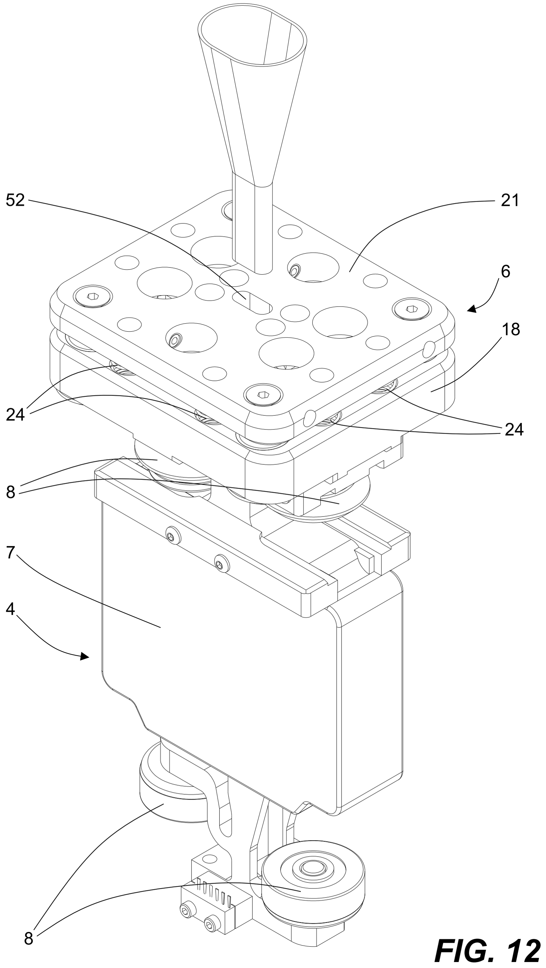

- Figure 12 is an axonometric top view of the carriage of Figure 2 with a supporting element removed and with an element for feeding a lubricating liquid;

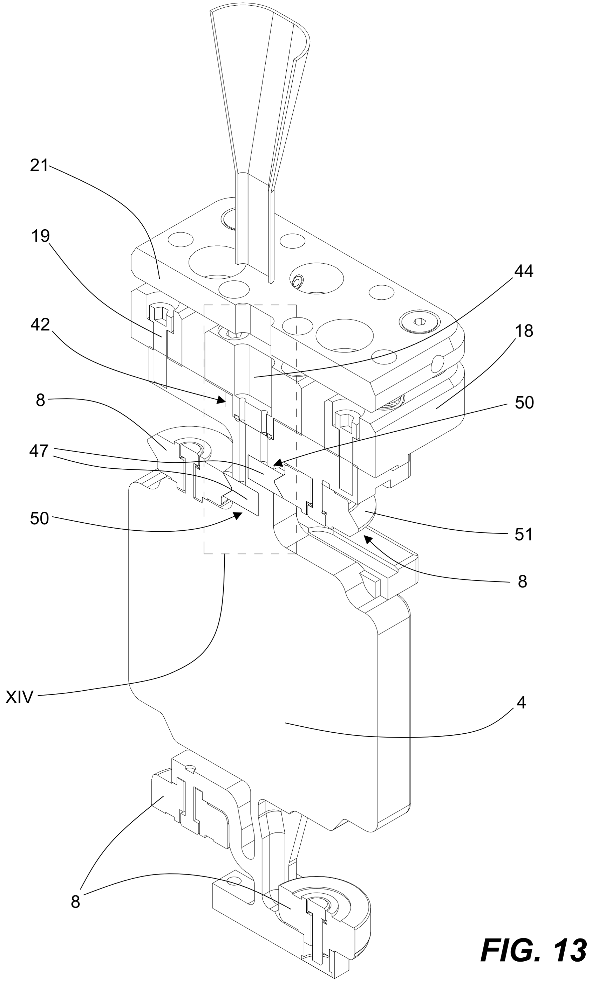

- Figure 13 is an axonometric top view in section of the carriage of Figure 12 sectioned according to a vertical section plane;

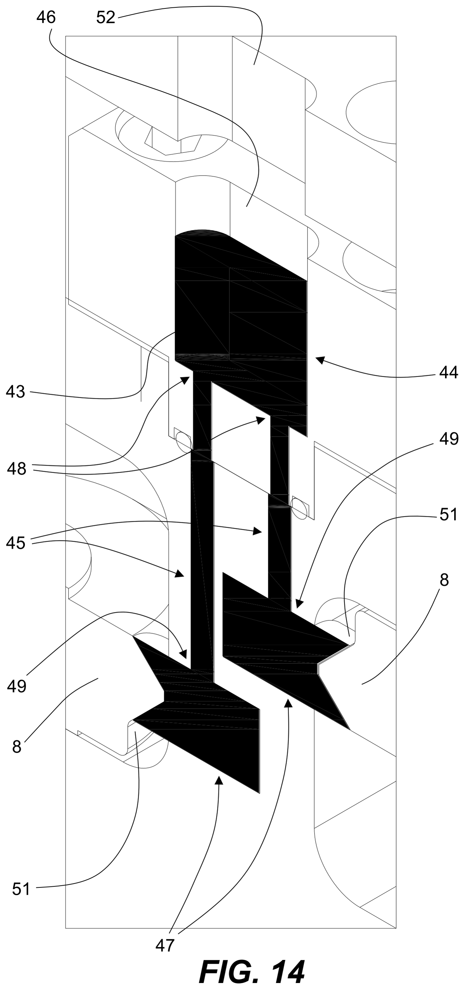

- Figure 14 is an enlarged view of the detail XIV of Figure 13 in an operating configuration;
- Figure 15 is a side view in section of the carriage of Figure 3 sectioned according to the section line XV - XV;
- Figure 16 is a front view in section of the carriage of Figure 4 sectioned according to the section line XVI - XVI; and

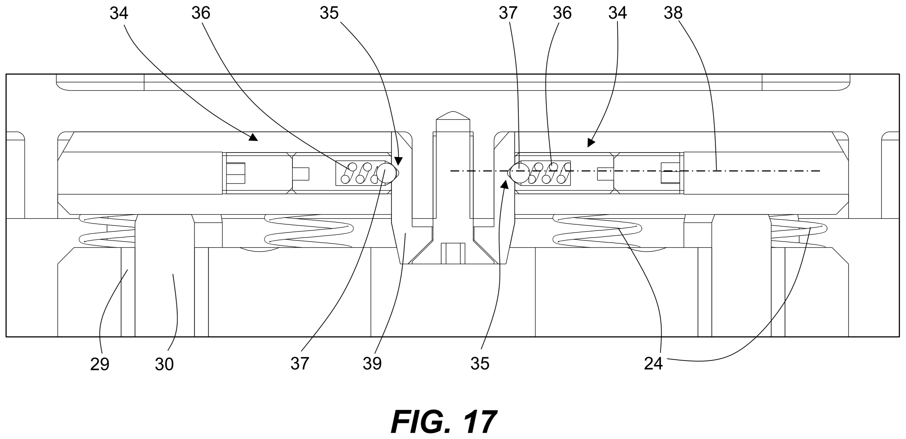

- Figure 17 is an enlarged view of the detail XVII of Figure 16.

With reference to the above-mentioned figures the reference number 1 denotes in its entirety an apparatus for conveying objects, according to this invention.

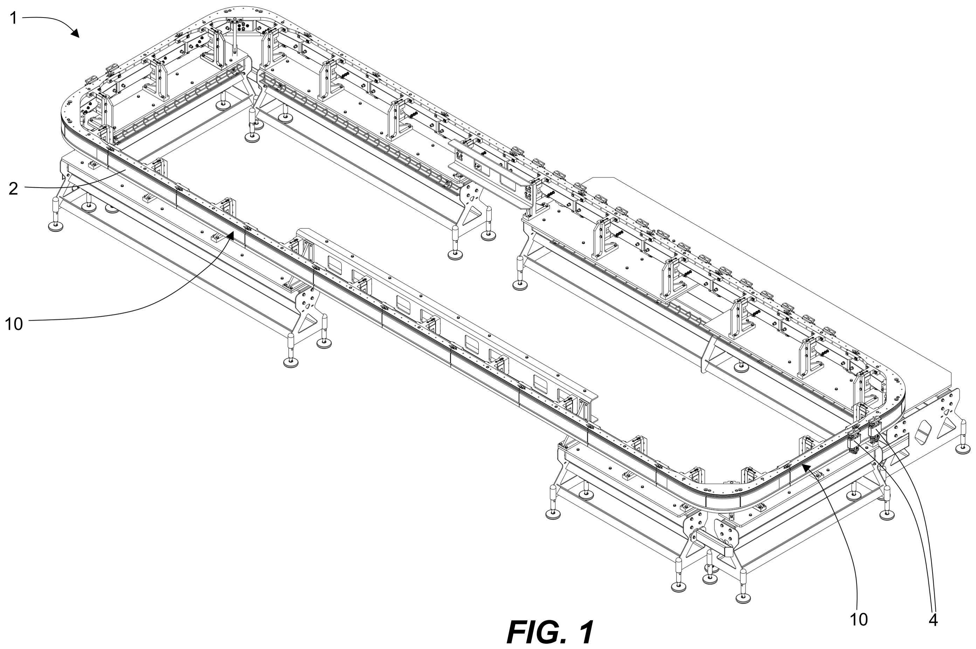

The apparatus 1 comprises a guide 2, which is constituted of a guide 2 with linear motors and which defines a forward movement path, and at least one carriage 3, which is coupled to the guide 2 and which is moved along the forward movement path by the linear motors of the guide 2. Advantageously, the apparatus 1 comprises a plurality of carriages 3 simultaneously coupled to the guide 2, each of which is configured to move one or more objects. Depending on the embodiments, the forward movement path may be either a closed path, as in Figure 1, or an open path. Although not illustrated in the accompanying figures, along the forward movement path there may also be (there will always be if the forward movement path is a closed path) a loading station for loading the objects and an unloading station for unloading the objects. Moreover, there may even be one or more processing stations present and corresponding further processing units (not illustrated).

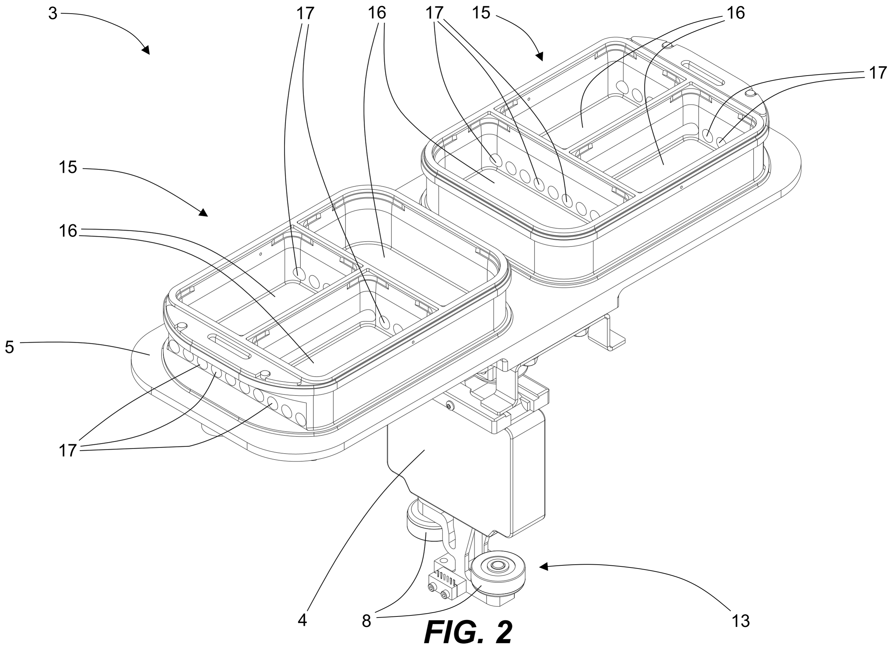

In particular, the guide 2 is clearly visible in Figure 1, whilst an example of a carriage 3 is clearly visible in Figure 2. It should be emphasised that the aspects strictly linked to operation of the guide 2 with linear motors, in particular operation of the linear motors themselves, are aspects which are in themselves known to a person who is expert in the sector and will not be explained in further detail in the following description.

The carriage 3 in turn comprises a movement element 4, a supporting element 5 and, in accordance with an innovative aspect of this invention, a connecting element 6.

The movement element 4 is slidably associated with the guide 2 and advantageously comprises a main body 7 and at least one wheel 8, with the wheel 8 rotatably connected to the main body 7 according to an axis of rotation 9 and coupled to the guide 2 for rolling on the guide 2 itself during the movement of the carriage 3 along the forward movement path. The presence of the wheel 8 is advantageous since it facilitates the movement of the movement element 4 relative to the guide 2. Advantageously, made in the guide 2 there is at least one groove 10 into which the wheel 8 is inserted and the wheel 8 is shaped to match the groove 10. In the embodiment illustrated, the movement element 4 comprises a plurality of wheels 8. In particular, the movement element 4 advantageously comprises four wheels 8 arranged in pairs: a first pair 11 of wheels 8 is placed at an upper portion 12 of the main body 7, whilst a second pair 13 of wheels 8 is placed at a lower portion 14 of the main body 7. In particular, the wheels 8 of the first pair 11 are inserted into a pair of grooves 10 made in the guide 2 and are each shaped to match the respective groove 10, whilst the wheels 8 of the second pair 13 are coupled to a portion of the guide 2 which is substantially smooth and without grooves (in the accompanying figures that portion is constituted of a vertical annular surface). Moreover, preferably the wheels 8 of each pair 11, 13 are positioned at different heights.

The supporting element 5 defines at least one housing 15 for housing the object and is connected to the movement element 4. In the embodiment of the carriage 3 shown in Figure 2, the supporting element 5 extends mainly horizontally and is intended to support two trays, each of which has three compartments. The supporting element 5 has two housings 15 for the trays, in each of which three recesses 16 can be identified, one for each compartment of the tray. However, the number of housings 15 and recesses 16 shall not be understood as limiting for this invention. In the embodiment shown in the accompanying figures, made on the supporting element 5 there are also holes for creating the vacuum 17 since the supporting element 5 is also configured as a lower element of a sealing device for sealing a covering film on the trays.

In contrast, the connecting element 6 is interposed between the movement element 4 and the supporting element 5, with the supporting element 5 connected to the movement element 4 by means of the connecting element 6. The connecting element 6 is advantageously an element separate from the movement element 4 and from the supporting element 5, and is connected to the movement element 4 and to the supporting element 5 by removable connecting means such as, for example, screws, bolts, fixing means 19 or the fastening units 34 described below.

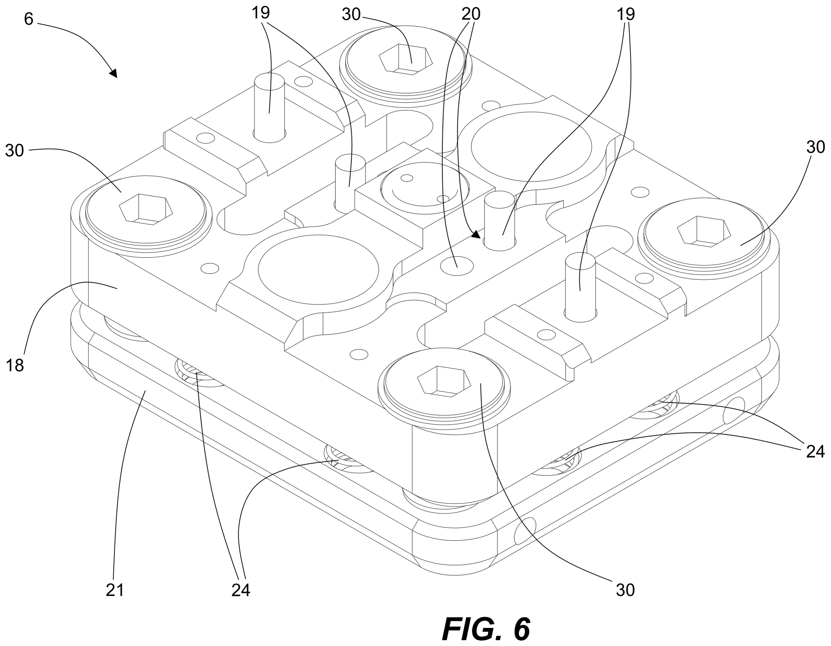

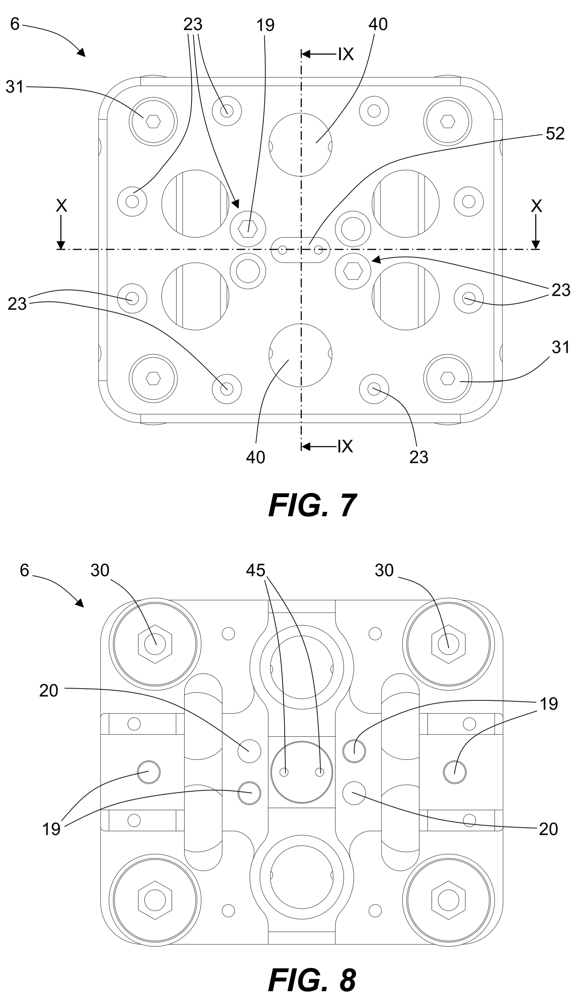

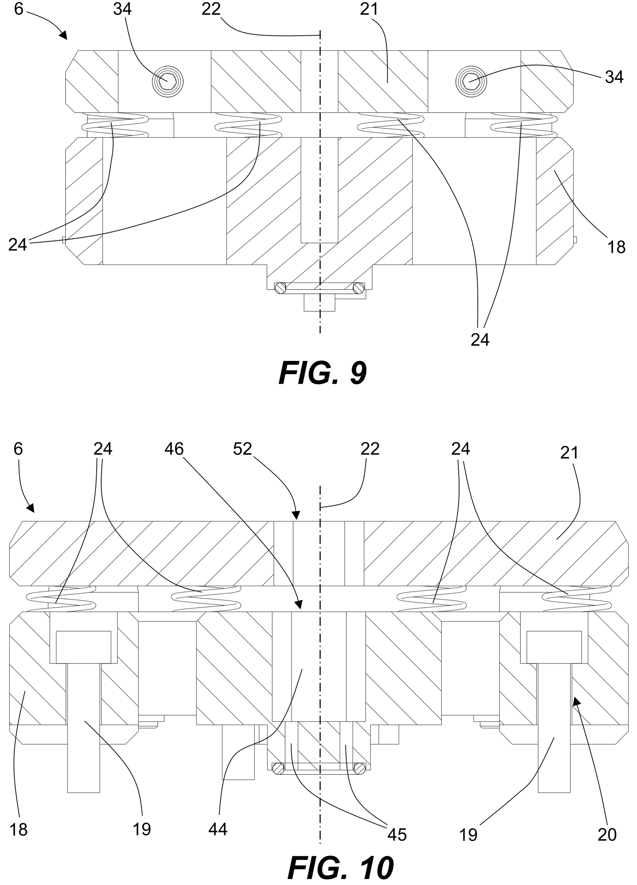

The connecting element 6, which constitutes one of the innovative aspects of this invention, comprises firstly a base body 18 which is fixed to the movement element 4. For that purpose, the base body 18 preferably comprises fixing means 19 which are inserted into first through holes 20 made in the base body 18 and which are screwed to the movement element 4 (that is clearly visible in Figures 6, 8 and 11). In the embodiment shown in the accompanying figures, the base body 18 comprises four fixing means 19, which are advantageously screws, each of which is inserted into a respective first through hole 20. In more detail, as is clearly visible in Figure 9, made in the base body 18 there are six first through holes 20, into two of which no fixing means 19 are inserted (but which are prepared, should they be necessary, for insertion of a respective fixing means 19).

Secondly, the connecting element 6 comprises a movable body 21, which is connected to the base body 18 and which is movable relative to it, along a line of movement 22 which is vertical, between a near position and an apart position.

The supporting element 5 is coupled to the movable body 21. The preferred ways in which the supporting element 5 is removably connected to the movable body 21 will be described in detail below. However, it is possible for the supporting element 5 to be coupled to the movable body 21 in other ways, for example which are similar to those used to connect the base body 18 to the movement element 4.

Advantageously, made in the movable body 21 there are second through holes 23, some of which are aligned with the first through holes 20 made in the base body 18 of the connecting element 6. In particular, four second through holes 23 made in the movable body 21 are aligned with four first through holes 20 made in the base body 18. That allows, for the aligned holes, the fixing means 19 to be passed first through the second through holes 23 of the movable body 21, then through the first through holes 20 of the base body 18, and for the fixing means to be screwed to the movement element 4 during assembly of the carriage 3, without the need to disassemble the connecting element 6.

Finally, the connecting element 6 comprises a plurality of elastic elements 24, which are mounted between the base body 18 and the movable body 21 for pushing the movable body 21 towards the apart position along the line of movement 22. More specifically, the elastic elements 24 are sized to keep the movable body 21 in the apart position when the required objects are loaded on the carriage 3, but to allow the shifting of the movable body 21 towards the near position when operating on the supporting element 5 there are forces greater than a predetermined minimum value (which will be greater than the maximum weight expected for the objects to be loaded on the supporting element 5).

Advantageously, each elastic element 24 extends between a first fastening end 25, which is inserted into a respective first hollow 26 made in the base body 18, and a second fastening end 27, which is inserted into a respective second hollow 28 made in the movable body 21. In the preferred embodiment, the elastic elements 24 are compression springs. Advantageously, one of either the base body 18 or the movable body 21 comprises at least one guiding unit 29, whilst the other of either the base body 18 or the movable body 21 comprises at least one sliding unit 30. That sliding unit 30 is slidably inserted into the guiding unit 29 and it is the sliding of the sliding unit 30 in the guiding unit 29 which guides 2 the movement of the movable body 21 relative to the base body 18 along the line of movement 22. In the preferred embodiments, such as that shown in the accompanying figures, the base body 18 comprises the guiding unit 29 whilst the movable body 21 comprises the sliding unit 30. In particular, the guiding unit 29 is a bushing inserted into a through hole made in the base body 18, whilst the sliding unit 30 is a pin which is slidably inserted into the bushing and which is fixed with a screw 31 to the movable body 21. At the opposite end to that fixed to the movable body 21, the pin has a widened head 32 which is wider than the inside of the bushing and which acts as a stop when the movable body 21 reaches the apart position. Advantageously, the base body 18 comprises a plurality of guiding units 29 (in particular, four bushings which are positioned at the four corners of the base body 18) and the movable body 21 comprises a plurality of sliding units 30 (in particular, four pins).

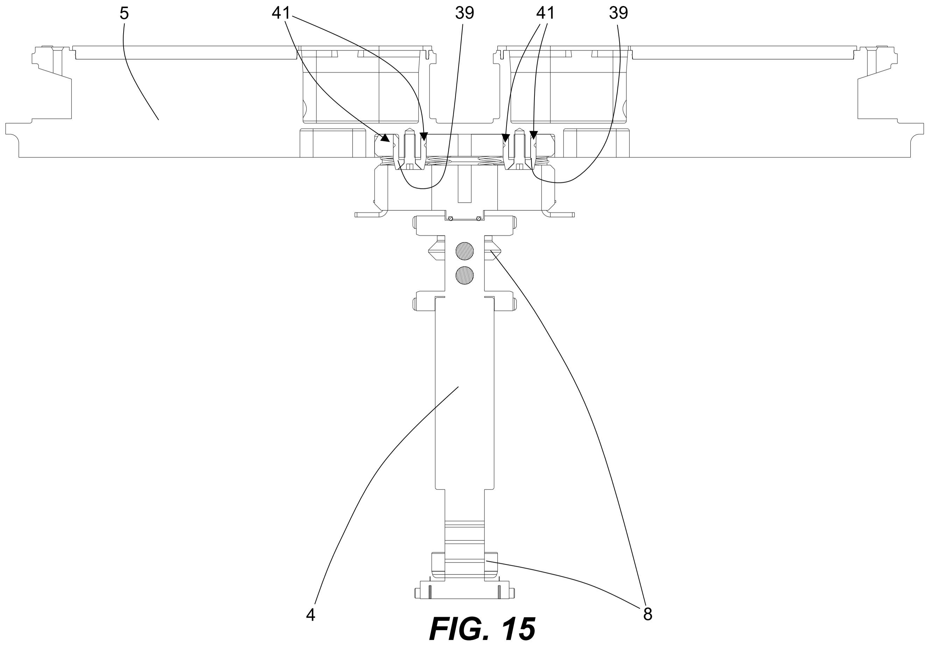

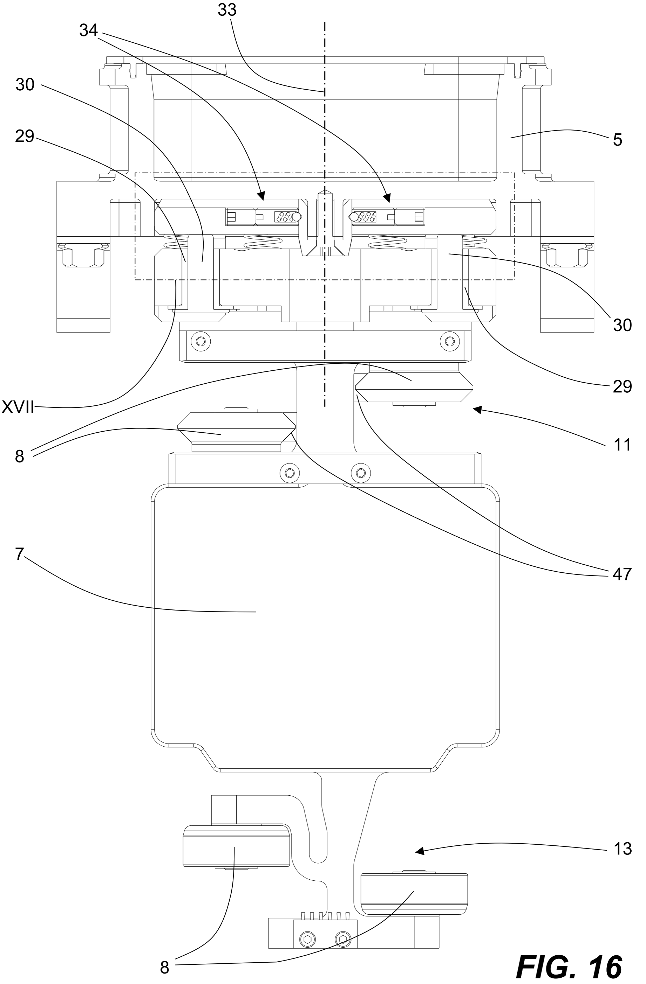

A main innovative aspect of this invention, not necessarily linked to the first innovative aspect described above, relates to a way in which the supporting element 5 is connected to the movable body 21 of the connecting element 6. In fact, in the preferred embodiments, the supporting element 5 is removably coupled to the movable body 21 along a line of coupling 33. Advantageously, one of either the supporting element 5 or the connecting element 6 comprises at least one fastening unit 34, whilst the other of either the supporting element 5 or the connecting element 6 has at least one seat 35 for at least partly receiving the fastening unit 34. In particular, the fastening unit 34 is switchable between an operating configuration and a non-operating configuration: when the supporting element 5 is mounted on the connecting element 6, the fastening unit 34 is at least partly inserted into the seat 35 when the fastening unit 34 is in the operating configuration (as shown in Figures 15 and 16), whilst the fastening unit 34 is extracted from the seat 35 when the fastening unit 34 is in the non-operating configuration.

In the embodiment shown in the accompanying figures, the fastening unit 34 is a spring-loaded grub. Advantageously that allows quick and easy coupling, and uncoupling, of the supporting element 5 to the movable body 21, and from the movable body 21, by simply applying sufficient force to overcome the resistance of the spring-loaded grub. In fact, in the operating configuration the spring 36 of the spring-loaded grub is in an extended configuration and holds the ball 37 of the spring-loaded grub inside the seat 35. In contrast, in the non-operating configuration, the spring 36 of the spring-loaded grub is in a compressed configuration and the ball 37 of the spring-loaded grub is not inserted inside the seat 35. Advantageously, starting from the situation in which the supporting element 5 is coupled to the connecting element 6, with the spring 36 in the extended configuration and the ball 37 in the seat 35, by applying sufficient upward force on the supporting element 5, the spring 36 switches its own configuration from the extended configuration to the compressed configuration, and remains in that condition as long as the ball 37 slides on the material surrounding the seat 35. The spring 36 of the spring-loaded grub again switches from the compressed configuration to the extended configuration when the supporting element 5 uncouples from the connecting element 6. Starting from this condition, in which the supporting element 5 is uncoupled from the connecting element 6 what was described is applicable in reverse, by pressing the supporting element 5 onto the connecting element 6, until the supporting element 5 is coupled to the connecting element 6.

Advantageously the line of coupling 33, along which the supporting element 5 is couplable to the movable body 21, is parallel to the line of movement 22, and the fastening unit 34 operates along a line of fastening 38 which is perpendicular to that line of coupling 33. Therefore, preferably, since the line of movement 22 is vertical the line of coupling 33 is also vertical, whilst the line of fastening 38 is horizontal.

Although the opposite is also possible, in the embodiment illustrated, the connecting element 6 comprises the fastening unit 34 and the supporting element 5 has the seat 35 for at least partly receiving the fastening unit 34. In these embodiments, the coupling between the supporting element 5 and the movable body 21 of the connecting element 6 preferably occurs by means of insertion of a portion of the supporting element 5 into the movable body 21. In particular, the supporting element 5 advantageously comprises at least one projecting portion 39 which projects towards the movement element 4 and which is insertable into a connecting hole 40 made in the movable body 21, with the seat 35 defined by a third hollow 41 which is made in this projecting portion 39. Preferably, the projecting portion 39 extends parallel to the line of coupling 33 (parallel to the line of movement 22) and is insertable in the connecting hole 40 along the same line of coupling 33. In the embodiment shown in the accompanying figures, the supporting element 5 comprises a pair of projecting portions 39, each inserted into a respective connecting hole 40 and, moreover, made in each projecting portion 39 there is a respective third hollow 41. In more detail, the third hollow 41 extends on the entire perimeter of the projecting portion 39.

Moreover, preferably, the connecting element 6 comprises a plurality of fastening units 34 each of which is insertable into a respective seat 35 made in the supporting element 5 (alternatively the fastening units 34 may be associated with the supporting element 5 and the seats 35 with the connecting element 6). In the embodiment illustrated, in which the two projecting portions 39 are present, two fastening units 34 operate on each of these projecting portions 39 (therefore, in total, advantageously there are four fastening units 34 present in the embodiment shown in the accompanying figures) and the seats 35 are defined in pairs by a same third hollow 41.

In accordance with a further innovative aspect of this invention, which may even be implemented independently of the other innovative aspects described above (the Applicant reserves the right to protect it independently even using divisional patent applications and even relative to carriages 3 in which the connecting element 6 is without elastic elements 24 and/or constitutes one piece with the supporting element 5 and/or the movement element 4), in the embodiments in which the movement element 4 comprises the wheel 8 coupled to the guide 2 for rolling on the guide 2 during the movement of the carriage 3 along the forward movement path, the carriage 3 also comprises a lubricating system 42 which is configured to feed a lubricating liquid 43 to the wheel 8. That allows lubrication of the wheel 8 which rolls on the guide 2 limiting wear on the wheel 8 itself. As previously described, in the accompanying figures the movement element 4 comprises two pairs 11, 13 of wheels 8 and advantageously the lubricating system 42 is configured to feed the lubricating liquid 43 to the wheels 8 of the pair placed at the upper portion 12 of the main body 7 (first pair 11). However, in other embodiments it is possible that the lubricating system 42 is configured to feed the lubricating liquid 43 to all of the wheels 8 or to a lower number of wheels 8.

Advantageously, the lubricating system 42 comprises a tank 44 and at least one feeding duct 45. Preferably, the tank 44 is associated with the connecting element 6 and is configured to contain the lubricating liquid 43. In particular, in the preferred embodiments the tank 44 is a cavity which is made in the base body 18 and which is open at the top at an upper opening 46. The feeding duct 45 is advantageously connected to the tank 44, extends in the movement element 4 and is configured to feed the lubricating liquid 43 towards the wheel 8. In the embodiment illustrated, the lubricating system 42 comprises a pair of feeding ducts 45 each of which is configured to feed the lubricating liquid 43 towards a respective wheel 8.

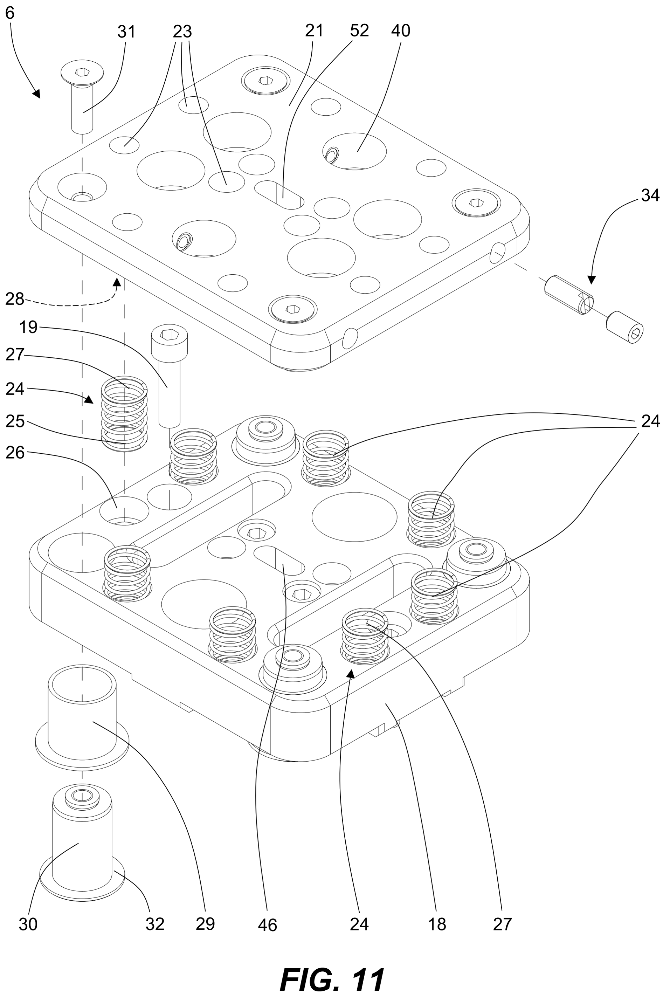

Advantageously, to apply the lubricating liquid 43 to the wheels 8 the lubricating system 42 also comprises at least one application element 47. In those embodiments, the feeding duct 45 extends between a first feeding end 48 and a second feeding end 49. At the first feeding end 48 the feeding duct 45 is in fluid communication with the tank 44, whilst at the second feeding end 49 it is associated with the application element 47. In those embodiments, the application element 47 is coupled to the wheel 8 for feeding the lubricating liquid 43 to that wheel 8. As is clearly visible in Figure 11, advantageously the application element 47 is partly inserted into a niche 50 made in the movement element 4. In particular, in the embodiment in which the two wheels 8 are present, the lubricating system 42 comprises two application elements 47 each placed at the second feeding end 49 of a respective feeding duct 45.

Preferably, the lubricating liquid 43 is fed to the wheel 8 by contact and rubbing with the outer surface 51 of the wheel 8: in fact, during the movement of the carriage 3 along the forward movement path, the wheel 8 rotates on itself and its outer surface 51 slides on the application element 47. That sliding of the wheel 8 on the application element 47 causes application of the lubricating liquid 43 on the outer surface 51 of the wheel 8. In those embodiments, the application element 47 is advantageously shaped to match the outer surface 51 of the wheel 8.

In the embodiment illustrated, the application element 47 is a pad made of felt or spongy material. Advantageously that allows the application element 47 to soak up lubricating liquid 43, to gradually release it during sliding of the wheel 8 on it and to not wear rapidly in contact with the wheel 8 (which usually rotates at high speeds).

Advantageously, in the preferred embodiments it is possible to feed the lubricating liquid 43 to the tank 44 in an automated way. For that purpose, advantageously in the movable body 21 a first insertion opening 52 is made which is vertically aligned with the tank 44 above the upper opening 46, in such a way as to allow insertion of the lubricating liquid 43 into the tank 44. In contrast, in other embodiments, the lubricating liquid 43 may be fed to the tank 44 manually.

In the preferred embodiments with automated feeding, insertion of the lubricating liquid 43 into the tank 44 may be carried out in two ways which are described below.

According to the first way, along the forward movement path the apparatus 1 advantageously has an uncoupling station, a lubricating station, and a coupling station. In some embodiments the three stations are placed along the path one downstream of another in the order listed, whilst in other embodiments different solutions may be provided. For example, the uncoupling station and the coupling station may coincide and the carriage 3 may arrive first in the uncoupling/coupling station, then shift into the lubricating station and then return to the uncoupling/coupling station. Moreover, the apparatus 1 preferably comprises an uncoupling device (not illustrated in the accompanying figures), associated with the forward movement path at the uncoupling station, a feeding device, associated with the forward movement path at the lubricating station, and a coupling device (not illustrated in the accompanying figures), associated with the forward movement path at the coupling station. Preferably, the uncoupling device is configured to uncouple the supporting element 5 from the movable body 21 when the carriage 3 is placed at the uncoupling station. In contrast, the feeding device is advantageously configured to feed the lubricating liquid 43 to the tank 44 through the first insertion opening 52, when the carriage 3 is placed at the feeding station. Since the uncoupling device removed the supporting element 5, the first insertion opening 52 is free and accessible to allow insertion of the lubricating liquid 43 into the tank 44. In fact, in this case, with the supporting element 5 coupled to the movable body 21, the first insertion opening 52 may be closed at the top and not be accessible to the feeding device. That is clearly visible in the case illustrated in the accompanying figures. Finally, the coupling device is advantageously configured to again couple the supporting element 5 to the movable body 21, when the carriage 3 is placed at the coupling station. In this way, after the lubricating liquid 43 has been fed to the tank 44, the supporting element 5 is repositioned on the movable body 21 so that it is possible to proceed with the movement of a further object.

It should be emphasised that in some embodiments it is possible that the uncoupling of the supporting element 5 from the movable body 21 and/or the feeding of the lubricating liquid 43 to the tank 44 and/or the coupling of the supporting element 5 to the movable body 21 are performed by an operator and not by the respective device (respectively, the uncoupling device, the feeding device and the coupling device).

In contrast, the second way of filling is implemented if in the supporting element 5 a second insertion opening is made which is vertically aligned with the first insertion opening 52 (solution not illustrated). In fact, in this case, along the forward movement path the apparatus 1 may have only the lubricating station. Moreover, the apparatus 1 comprises the feeding device which is associated with the forward movement path at the lubricating station and which is configured to feed, in use, the lubricating liquid 43 to the tank 44 both through the second insertion opening and through the first insertion opening 52, when the carriage 3 is placed at the feeding station. In fact, in this case it is not necessary to uncouple the supporting element 5 from the movable body 21 to render the tank 44 accessible and therefore to be able to feed the lubricating liquid 43 to the tank 44 itself.

Moreover, as previously defined, it should be emphasised that in some embodiments it is possible that feeding of the lubricating liquid 43 to the tank 44 is performed by an operator and not by the feeding device.

The two ways of filling just described shall not be considered limiting for this invention since it is possible that feeding of the lubricating liquid 43 to the tank 44 takes place in ways different from the two described above. For example, in some cases it is possible that the movement element 4 comprises a feeding channel which is in fluid connection with the tank 44 and through which the lubricating liquid 43 can be directly inserted into it.

This invention brings important advantages.

Thanks to the main innovative aspect of this invention it was possible to provide an apparatus for conveying objects in which it is simpler to perform heavy-duty mechanical processing operations on the objects conveyed, than is currently the case with prior art apparatuses and in which size change-over operations can be performed more easily and quickly than in prior art apparatuses.

Thanks to the third innovative aspect described it was possible to provide an apparatus for conveying objects in which in which the wheels of the movement element are less exposed to wear than the wheels of the movement elements of prior art apparatuses.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. An apparatus for conveying objects, comprising a guide (2), which is constituted of a guide (2) with linear motors and which defines a forward movement path, and a carriage (3), which is coupled to the guide (2) and which is moved along the forward movement path by the linear motors of the guide (2);
wherein the carriage (3) comprises:
a movement element (4) which is slidably associated with the guide (2);
a supporting element (5) which defines at least one housing (15) for housing, in use, an object and which is connected to the movement element (4); and
a connecting element (6) which is interposed between the movement element (4) and the supporting element (5), the supporting element (5) being connected to the movement element (4) by means of the connecting element (6);
wherein the connecting element (6) comprises:
a base body (18) which is fixed to the movement element (4);
a movable body (21) which is connected to the base body (18) and which is movable relative to it along a line of movement (22), which in use is vertical, between a near position and an apart position, the supporting element (5) being coupled to the movable body (21); and
a plurality of elastic elements (24) which are mounted between the base body (18) and the movable body (21) for pushing the movable body (21) towards the apart position;
wherein moreover:
the supporting element (5) is removably couplable to the movable body (21) along a line of coupling (33);
one of either the supporting element (5) or the connecting element (6) comprises at least one fastening unit (34) and the other of either the supporting element (5) or the connecting element (6) has at least one seat (35) for at least partly receiving the at least one fastening unit (34), the at least one fastening unit (34) being switchable between an operating configuration and a non-operating configuration;
the at least one fastening unit (34) is a spring-loaded grub; and
when the supporting element (5) is mounted on the connecting element (6), the at least one fastening unit (34) is at least partly inserted into the at least one seat (35) when the at least one fastening unit (34) is in the operating configuration, and the at least one fastening unit (34) is extracted from the at least one seat (35) when the at least one fastening unit (34) is in the non-operating configuration.

2. The apparatus according to claim 1, wherein the movement element (4) comprises a main body (7) and at least one wheel (8) which is rotatably connected to the main body (7) according to an axis of rotation (9) and which is coupled to the guide (2) for rolling on the guide (2) during the movement of the carriage (3) along the forward movement path, and wherein the carriage (3) also comprises a lubricating system (42) which is configured to feed, in use, a lubricating liquid (43) to the at least one wheel (8).

3. The apparatus according to claim 2, wherein the lubricating system (42) comprises a tank (44), which is associated with the connecting element (6) and which is configured to contain, in use, the lubricating liquid (43), and at least one feeding duct (45), which is connected to the tank (44), which extends in the movement element (4) and which is configured to feed, in use, the lubricating liquid (43) towards the at least one wheel (8).

4. The apparatus according to claim 3, wherein the lubricating system (42) also comprises at least one application element (47) and wherein the at least one feeding duct (45) extends between a first feeding end (48), at which the at least one feeding duct (45) is in fluid communication with the tank (44), and a second feeding end (49), associated with the at least one application element (47), said at least one application element (47) being coupled to an outer surface (51) of said at least one wheel (8) for feeding, in use, the lubricating liquid (43) to the outer surface (51) of the at least one wheel (8).

5. The apparatus according to claim 4, wherein, during a rotation of the wheel (8) relative to the main body (7), the outer surface (51) of the wheel (8) slides on the at least one application element (47), the sliding of the outer surface (51) of the at least one wheel (8) on the at least one application element (47) causing, in use, application of the lubricating liquid (43) on the outer surface (51) of the at least one wheel (8).

6. The apparatus according to claim 5, wherein made in the guide (2) there is at least one groove (10) into which the at least one wheel (8) is inserted and wherein said outer surface (51) of the at least one wheel (8) is shaped to match the at least one groove (10) and the at least one application element (47) is shaped to match the outer surface (51) of the at least one wheel (8).

7. The apparatus according to any one of claims 4 to 6, wherein the at least one application element (47) is a pad made of felt or spongy material.

8. The apparatus according to any one of claims 2 to 7, wherein the tank (44) is a cavity which is made in the base body (18) and which is open at the top at an upper opening (46).

9. The apparatus according to claim 8, wherein in the movable body (21) a first insertion opening (52) is made which is vertically aligned with the tank (44) above the upper opening (46) to allow, in use, insertion of the lubricating liquid (43) into the tank (44).

10. The apparatus according to claim 9, wherein along the forward movement path the apparatus (1) has an uncoupling station, a lubricating station, and a coupling station, the apparatus (1) also comprising:
an uncoupling device which is associated with the forward movement path at the uncoupling station and which is configured to uncouple the supporting element (5) from the movable body (21), when the carriage (3) is placed at the uncoupling station;
a feeding device which is associated with the forward movement path at the lubricating station and which is configured to feed, in use, the lubricating liquid (43) to the tank (44) through the first insertion opening (52), when the carriage (3) is placed at the feeding station; and
a coupling device which is associated with the forward movement path at the coupling station and which is configured to couple the supporting element (5) to the movable body (21), when the carriage (3) is placed at the coupling station.

11. The apparatus according to claim 9, wherein in the supporting element (5) a second insertion opening is made which is vertically aligned with the first insertion opening (52), wherein along the forward movement path the apparatus (1) has a lubricating station and wherein the apparatus (1) comprises a feeding device which is associated with the forward movement path at the lubricating station and which is configured to feed, in use, the lubricating liquid (43) to the tank (44) through the second insertion opening and through the first insertion opening (52), when the carriage (3) is placed at the feeding station.

12. The apparatus according to any one of claims 1 to 11, wherein one of either the base body (18) or the movable body (21) comprises at least one guiding unit (29) and wherein the other of either the base body (18) or the movable body (21) comprises at least one sliding unit (30), the at least one sliding unit (30) being slidably inserted into the at least one guiding unit (29) and the sliding of the at least one sliding unit (30) in the at least one guiding unit (29) guiding the movement of the movable body (21) relative to the base body (18) along the line of movement (22).

13. The apparatus according to any one of claims 1 to 12, wherein the line of coupling (33) is parallel to the line of movement (22) and wherein the at least one fastening unit (34) operates along a line of fastening (38) which is perpendicular to the line of coupling (33).

14. The apparatus according to any one of claims 1 to 13, wherein the connecting element (6) comprises the at least one fastening unit (34) and wherein the supporting element (5) has the at least one seat (35) for at least partly receiving said at least one fastening unit (34).

15. The apparatus according to any one of claims 1 to 14, wherein said other of either the supporting element (5) or the connecting element (6) comprises at least one projecting portion (39) which projects towards said one of either the supporting element (5) or the connecting element (6) and which is insertable into a connecting hole (40) made in said one of either the supporting element (5) or the connecting element (6), the at least one seat (35) being defined by a third hollow (41) made in the projecting portion (39).

16. The apparatus according to any one of claims 1 to 15, wherein a plurality of fastening units (34) is present each of which is insertable into a respective seat (35).

17. The apparatus according to any one of claims 1 to 16, wherein the connecting element (6) is an element separate from the movement element (4) and from the supporting element (5), and is connected to the movement element (4) and to the supporting element (5) by removable connecting means.
